Europäisches Patentamt

European Patent Office

Office européen des brevets

(11) Veröffentlichungsnummer: **0 477 464 A2**

# EUROPÄISCHE PATENTANMELDUNG

(21) Anmeldenummer: **91105820.4**

(22) Anmeldetag: **12.04.91**

(51) Int. Cl.5: **F16F 1/06**, F16F 3/04

(30) Priorität: **28.09.90 DE 4030655**

(43) Veröffentlichungstag der Anmeldung:
**01.04.92 Patentblatt 92/14**

(84) Benannte Vertragsstaaten:
**DE FR GB IT NL SE**

(71) Anmelder: **VDO Adolf Schindling AG**
**Gräfstrasse 103**
**W-6000 Frankfurt/Main 90(DE)**

(72) Erfinder: **Burkhard, Stefan**
**Philippsbergstrasse 10**
**W-6200 Wiesbaden(DE)**

(74) Vertreter: **Klein, Thomas, Dipl.-Ing. (FH)**
**Sodener Strasse 9 Postfach 6140**
**W-6231 Schwalbach a. Ts.(DE)**

(54) Schenkelfeder sowie Drosselklappenstutzen mit einer solchen.

(57) Eine Schenkelfeder (5) für einen Drosselklappenstutzen (1) besteht aus zumindest zwei durchmessergleichen und mit gleicher Steigung gewickelten Federn (6, 7), wobei die Windungen der einen Feder (6) in den Windungszwischenräumen der anderen Feder (7) verlaufen. Dadurch ist die Schenkelfeder (5) redundant, benötigt jedoch nicht wesentlich mehr Platz, als eine übliche, nicht redundante Schenkelfeder.

Fig.2

EP 0 477 464 A2

Die Erfindung betrifft eine Schenkelfeder mit einem wendelförmig gewickelten Federteil, insbesondere für die Rückstellung der Seilscheibe eines Drosselklappenstutzens. Weiterhin betrifft die Erfindung einen Drosselklappenstutzen mit einer solchen Schenkelfeder.

Bei der Lastregelung eines Kraftfahrzeuges ist es erforderlich, daß bei Ausfall oder einer Störung elektrischer Stellelemente der Drosselklappe, diese aus einer Offenstellung durch eine Feder in eine Leerlaufstellung zurückbewegt wird, damit das Kraftfahrzeug nicht vom Fahrer unbeabsichtigt mit einer hohen Motorleistung angetrieben wird. Auch für zahlreiche andere Anwendungsfälle in der Technik sind Schenkelfedern vorgesehen, welche bei Ausfall bestimmter Komponenten ein Bauteil in eine sichere Stellung zurückbewegen.

Brechen solche Rückstellfedern, so kann die aus Sicherheitsgründen erforderliche Rückstellung nicht mehr erfolgen. Deshalb besteht häufig die Notwendigkeit, redundante Rückstellfederanordnungen vorzusehen. In der Praxis benutzt man hierfür zwei Federn, die entweder gleichen Durchmesser haben und hintereinander, oder die unterschiedlichen Durchmesser aufweisen und koaxial ineinander angeordnet werden. Im ersten Fall wird der Bauraum in axialer Richtung, im zweiten Fall in radialer Richtung zum Teil erheblich vergrößert. Deshalb können bei ungünstigen Platzverhältnissen redundante Federsysteme oftmals nicht eingesetzt werden.

Der Erfindung liegt die Aufgabe zugrunde, eine Schenkelfeder der eingangs genannten Art so auszubilden, daß sich ohne zusätzlichen Platzbedarf eine Redundanz ergibt. Weiterhin soll ein Drosselklappenstutzen mit einer solchen redundanten Schenkelfeder geschaffen werden, der einen möglichst geringen Platzbedarf hat.

Die erstgenannte Aufgabe wird erfindungsgemäß dadurch gelöst, daß die Schenkelfeder aus zumindest zwei durchmessergleichen und mit gleicher Steigung gewickelten Federn besteht, wobei die Windungen der einen Feder in den Windungszwischenräumen der anderen Feder verlaufen.

Eine solche Schenkelfeder bietet den Vorteil einer Parallelredundanz, da bei einem Bruch der einen Feder die andere noch in der Lage ist, die erforderliche Stellbewegung auszuführen.

Die beiden die erfindungsgemäße Schenkelfeder bildenden Federn können getrennt voneinander hergestellt und dann ineinandergedreht werden. Besonders vorteilhaft ist es jedoch, wenn die Windungen der einen Feder gegen die Windungen der anderen Feder anliegen. Eine solche Schenkelfeder kann kostengünstig durch gemeinsames Wickeln der Federn erzeugt werden.

Die zweitgenannte Aufgabe, nämlich die Schaffung eines Drosselklappenstutzen mit einer mittels einer Seilscheibe betätigbaren Drosselklappenwelle und einer wendelförmig gewickelten Schenkelfeder zur Rückstellung der Seilscheibe und damit auch der Drosselklappe, wird erfindungsgemäß dadurch gelöst, daß die Schenkelfeder aus zumindest zwei durchmessergleichen und mit gleicher Steigung gewickelten Federn besteht, wobei die Windungen der einen Feder in den Windungszwischenräumen der anderen Feder verlaufen.

Ein solcher Drosselklappenstutzen benötigt nicht wesentlich mehr Bauraum als ein üblicher Drosselklappenstutzen, bietet jedoch den Vorteil einer Parallelredundanz. Bei einem Bruch einer Feder kann die Seilscheibe und damit auch die Drosselklappe von der noch funktionstüchtigen Feder in die erforderliche Leerlaufstellung zurückbewegt werden.

Die Herstellung der Schenkelfeder ist besonders einfach durch gleichzeitiges Wickeln beider die Schenkelfeder bildenden Federn möglich, wenn gemäß einer vorteilhaften Weiterbildung der Erfindung die Windungen der einen Feder gegen die Windungen der anderen Feder anliegen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1    eine Seitenansicht eines Drosselklappenstutzens nach der Erfindung,

Fig. 2    eine perspektivische Ansicht einer erfindungsgemäße gestalteten Schenkelfeder.

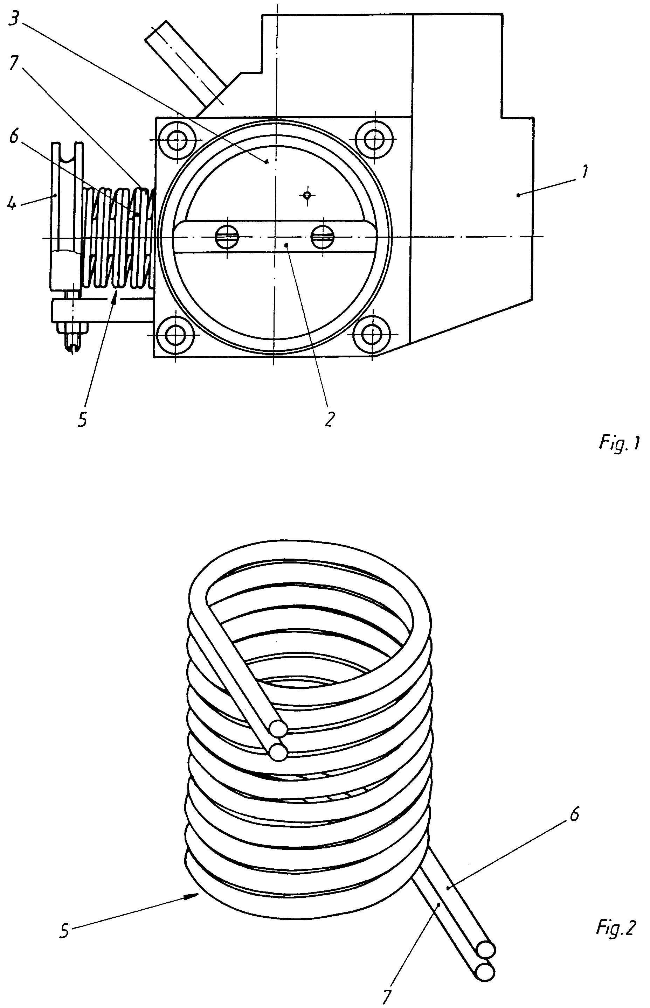

Die Figur 1 zeigt einen Drosselklappenstutzen 1, auf dessen Drosselklappenwelle 2 auf übliche Weise eine Drosselklappe 3 befestigt ist. Die Drosselklappe 3 kann mittels einer mit der Drosselklappenwelle 2 gekoppelten Seilscheibe 4 verstellt werden. Zum Zurückstellen der Seilscheibe 4 und damit auch der Drosselklappe 3 ist zwischen dem Gehäuse des Drosselklappenstutzens 1 und der Seilscheibe 4 eine Schenkelfeder 5 angeordnet, welche erfindungsgemäß aus zwei durchmessergleichen und mit gleicher Steigung verlaufenden Federn 6, 7 gebildet ist.

Die Gestaltung der Schenkelfeder 5 ergibt sich aus Figur 2. In ihr ist zu sehen, daß die beiden Federn 6, 7 derart ineinander verschachtelt sind, daß die Windungen der einen Feder 6 in den Zwischenräumen der anderen Feder 7 verlaufen. Weiterhin zeigt Figur 2, daß sich die Windungen der Federn 6 und 7 gegenseitig berühren. Dadurch kann die Schenkelfeder 5 durch gemeinsames Wickeln beider Federn 6, 7 hergestellt werden.

**Patentansprüche**

1.  Schenkelfeder mit einem wendelförmig gewickelten Federteil, insbesondere für die Rückstellung der Seilscheibe eines Drosselklappenstutzens, dadurch gekennzeichnet, daß die Schenkelfeder (5) aus zumindest zwei durchmessergleichen und mit gleicher Steigung gewickelten Federn (6, 7) besteht, wobei die Windungen der einen Feder (6) in den Windungszwischenräumen der anderen Feder (7) verlaufen.

2. Schenkelfeder nach Anspruch 1, dadurch gekennzeichnet, daß die Windungen der einen Feder (6) gegen die Windungen der anderen Feder (7) anliegen.

3. Drosselklappenstutzen mit einer mittels einer Seilscheibe betätigbaren Drosselklappenwelle und einer wendelförmig gewickelten Schenkelfeder zur Rückstellung der Seilscheibe und damit auch der Drosselklappe, dadurch gekennzeichnet, daß die Schenkelfeder (5) aus zumindest zwei durchmessergleichen und mit gleicher Steigung gewickelten Federn (6, 7) besteht, wobei die Windungen der einen Feder (6) in den Windungszwischenräumen der anderen Feder (7) verlaufen.

4. Drosselklappenstutzen nach Anspruch 3, dadurch gekennzeichnet, daß die Windungen der einen Feder (6) gegen die Windungen der anderen Feder (7) anliegen.

Fig. 1

Fig.2